# EUROPEAN PATENT SPECIFICATION

(11) **EP 4 488 127 B1**
(45) Date of publication and mention of the grant of the patent: **07.10.2026**
(21) Application number: 23763552.9
(22) Date of filing: 02.03.2023
(51) Int. Cl.: B60T 7/12, B60T 8/171

(54) **BRAKE FLUID PRESSURE CONTROL DEVICE FOR BAR HANDLE VEHICLE**
BREMSFLÜSSIGKEITSDRUCKSTEUERUNGSVORRICHTUNG FÜR FAHRZEUG MIT LENKSTANGE
DISPOSITIF DE COMMANDE DE PRESSION DE LIQUIDE DE FREIN POUR VÉHICULE À GUIDON

(30) Priority: 04.03.2022 JP 2022033189
(43) Date of publication of application: 08.01.2025
(73) Proprietor: Astemo, Ltd., Tokyo 100-0004 (JP)
(72) Inventor: YAMAOKA, Takumi, Hitachinaka-shi, Ibaraki 312-8503 (JP); TSUDA, Fumiya, Hitachinaka-shi, Ibaraki 312-8503 (JP)
(74) Representative: Plougmann Vingtoft a/s
(86) International application number: PCT/JP2023/007894
(87) International publication number: WO 2023/167295

(56) References cited:
- EP-A1- 3 395 631
- EP-A1- 3 831 699
- JP-A- 2006 111 208
- JP-A- 2006 315 663
- JP-A- 2009 539 689
- JP-A- 2011 230 667
- JP-A- 2013 071 472
- JP-A- 2018 001 774
- JP-A- 2021 160 673
- JP-A- 2021 179 195
- US-A1- 2010 017 085

## Description

### Technical Field

The present invention relates to a brake fluid pressure control device for a bar handle vehicle provided with a hydraulic unit for increasing, holding, and reducing a hydraulic pressure of a wheel brake.

### Background Art

In the related art, as a brake fluid pressure control device for a bar handle vehicle, there has been known one capable of executing brake hold control of increasing and holding a brake pressure in a brake hydraulic pressure circuit of a rear wheel, which is a driving wheel, when a two-wheeled vehicle with a motor is stopped and a brake operating member is operated (see Patent Literature 1).

Another example of a brake hold function in an integral brake system and an electronic brake system for a motorcycle, which simplifies holding the motorcycle and/or starting, is known from Patent Literature 2.

### Citation List

### Patent Literature

Patent Literature 1: JP2009-539689A
Patent Literature 2: US2010/017085 A1.

### Summary of Invention

However, in the related art, since brake hold control is performed on a driving wheel, it is necessary to provide a hydraulic unit for the driving wheel, which will cause the problem of high costs.

Therefore, an objective of the invention is to achieve a cost reduction by adopting a configuration in which brake hold control can be implemented without providing a hydraulic unit for a driving wheel.

In order to solve the above problem, the invention provides a brake fluid pressure control device for a bar handle vehicle, the device including: a driving wheel side brake configured to brake a driving wheel; a driven wheel side brake configured to brake a driven wheel; a hydraulic unit configured to increase, hold, and reduce a hydraulic pressure of the driven wheel side brake; and a controller configured to control the hydraulic unit.

When it is determined that a bar handle vehicle is stopped and a condition for maintaining a vehicle stop is satisfied, the controller executes brake hold control including pressure increase control of increasing the hydraulic pressure of the driven wheel side brake and holding control of holding the hydraulic pressure of the driven wheel side brake.

According to the configuration, since the brake hold control can be executed without providing a hydraulic unit for the driving wheel, the cost can be reduced.

The controller may switch the pressure increase control to the holding control when it is determined that a first condition is satisfied after executing the pressure increase control, and switch the holding control to the pressure increase control when it is determined that a second condition is satisfied after executing the holding control.

According to the configuration, by alternately switching the pressure increase control and the holding control, for example, even when the hydraulic pressure slightly decreases during the holding control, the pressure increase control is executed thereafter, so that the hydraulic pressure of the driven wheel side brake can be favorably maintained at a predetermined pressure.

The first condition may be that a first time elapses from start of the pressure increase control, and the second condition may be that a second time elapses from start of the holding control.

According to the configuration, since the switching between the pressure increase control and the holding control is performed based on the time, a detection means such as a hydraulic pressure sensor is not required, and an inexpensive configuration can be implemented.

When a release condition for releasing the brake hold control is satisfied, the controller may reduce the hydraulic pressure of the driven wheel side brake at a first gradient.

According to the configuration, when the release condition of the brake hold control is satisfied, since the hydraulic pressure of the driven wheel side brake is gradually reduced at the first gradient, it is possible to restrict a rider from having a feeling of discomfort.

When an operation amount of an accelerator is equal to or greater than a predetermined amount, or when a wheel speed or a vehicle body velocity exceeds a predetermined threshold, the controller may reduce the hydraulic pressure of the driven wheel side brake at a second gradient larger than the first gradient.

According to the configuration, when a rider has an intention to start from a standstill such as when the operation amount of the accelerator is equal to or greater than the predetermined amount, since the hydraulic pressure of the driven wheel side brake is reduced at the second gradient larger than the first gradient, the pressure reduction is performed quickly, and the vehicle can be caused to start from a standstill smoothly.

The brake fluid pressure control device for a bar handle vehicle according to the invention further includes a driven wheel side brake operating member configured to operate the driven wheel side brake, and a driving wheel side brake operating member configured to operate the driving wheel side brake. The condition for maintaining a vehicle stop is a condition that an operation on the driving wheel side brake operating member is continued for a predetermined time or longer.

By setting the operation on the driving wheel side brake operating member as the condition for maintaining a vehicle stop, it is possible to accurately determine whether the rider has an intention to maintain the vehicle stop.

The controller may determine, based on a signal from an angle sensor configured to detect an operation angle of the driving wheel side brake operating member, whether the driving wheel side brake operating member is operated.

According to the configuration, since whether the driving wheel side brake operating member is operated is determined based on a signal from the angle sensor, for example, the configuration can be made less expensive than when the operation on the driving wheel side brake operating member is determined using another sensor.

The driving wheel side brake may be a mechanical brake.

According to the configuration, since the driving wheel side brake is a mechanical brake, the brake fluid pressure control device for a bar handle vehicle can be implemented to have an inexpensive configuration.

### Brief Description of Drawings

[FIG. 1] FIG. 1 is a diagram illustrating a configuration of a motorcycle including a brake fluid pressure control device for a bar handle vehicle according to an embodiment.
[FIG. 2] FIG. 2 is a flowchart illustrating operations performed by a controller.
[FIG.3] FIG. 3 is a flowchart illustrating a change in each parameter from when brake hold control starts to when the brake hold control ends due to establishment of a release condition.
[FIG. 4] FIG. 4 is a flowchart illustrating a change in each parameter from when brake hold control starts to when the brake hold control ends due to establishment of a condition of an intention to start from a standstill.

### Description of Embodiments

Hereinafter, an embodiment of the invention will be described in detail with reference to the drawings as appropriate.

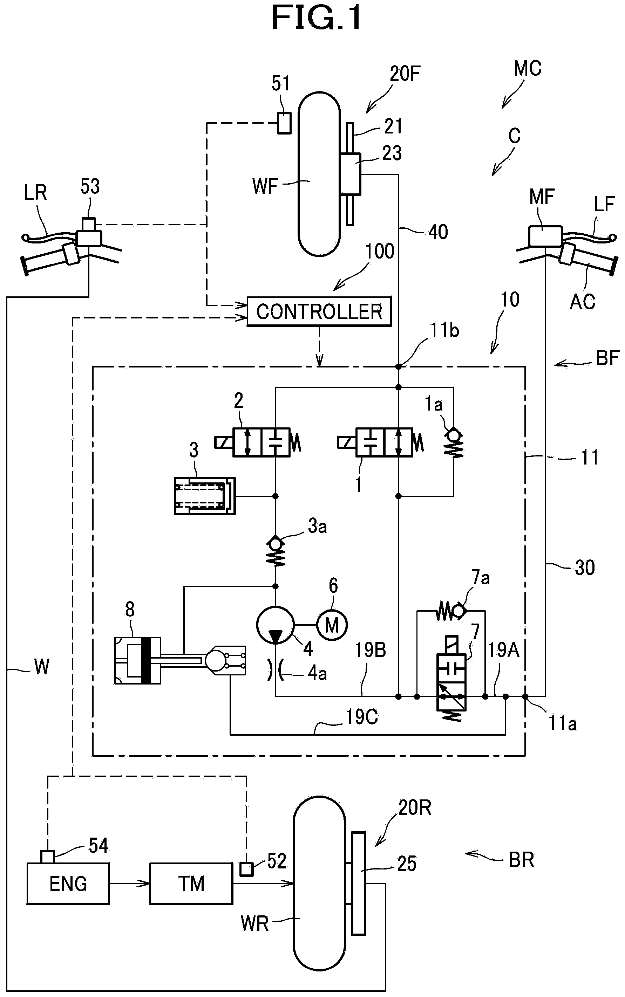

As illustrated in FIG. 1, a motorcycle MC as an example of a bar handle vehicle includes an engine ENG, a transmission TM, and a brake fluid pressure control device C for a bar handle vehicle.

The engine ENG is a driving source that applies a driving force to a rear wheel WR, and is coupled to the rear wheel WR via the transmission TM. That is, in the motorcycle MC of the embodiment, the rear wheel WR is a driving wheel and a front wheel WF is a driven wheel. The engine ENG is provided with a throttle sensor 54 that detects an opening degree of a throttle valve of the engine ENG. The opening degree of the throttle valve increases as an operation amount of an accelerator AC increases. The transmission TM is a mechanism that changes output of the driving force of the engine ENG and transmits the driving force to the rear wheel WR. A speed detection sensor 52 is provided near an output shaft of the transmission TM.

The speed detection sensor 52 is a sensor (so-called speedometer sensor) that detects a wheel speed of the rear wheel WR, and detects a wheel speed corresponding to a speed displayed by a speedometer (not shown). The speed detection sensor 52 has a different detection mode from a wheel speed sensor 51 that detects a wheel speed of the front wheel WF. Here, the wheel speed sensor 51 is a sensor that generates a pulse wave accompanying wheel rotation.

The brake fluid pressure control device C for a bar handle vehicle includes a brake system BF of the front wheel WF, a brake system BR of the rear wheel WR, and a controller 100.

The brake system BF mainly includes a front brake lever LF as an example of a driven wheel side brake operating member, a master cylinder MF, a hydraulic unit 10, a front brake 20F as an example of a driven wheel side brake, a pipe 30 connecting the master cylinder MF and an input port 11a of the hydraulic unit 10, and a pipe 40 connecting an output port 11b of the hydraulic unit 10 and the front brake 20F.

The front brake lever LF is an operating lever for operating the front brake 20F, is disposed on the right side of a handlebar of the motorcycle MC, and can be operated by a rider's right hand.

The master cylinder MF is a device that outputs a hydraulic pressure corresponding to an operation amount of the front brake lever LF.

The front brake 20F is a brake that brakes the front wheel WF. The front brake 20F mainly includes a brake rotor 21, a brake pad (not shown), and a wheel cylinder 23 that generates a brake force (braking force) by pushing the brake pad against the brake rotor 21 by a hydraulic pressure output from the master cylinder MF.

The hydraulic unit 10 is a unit for increasing, holding, and reducing the hydraulic pressure of the front brake 20F. The hydraulic unit 10 is implemented by disposing various solenoid valves and the like on a pump body 11 that is a base body having a fluid line (a hydraulic pressure line) through which a brake fluid flows. In a normal state, a continuous fluid line runs from the input port 11a to the output port 11b of the pump body 11, so that the hydraulic pressure output from the master cylinder MF is transmitted to the front brake 20F.

A pressure regulator 7, which is a normally open proportional solenoid valve capable of adjusting a difference in hydraulic pressure between hydraulic pressure lines at the upstream and downstream sides in accordance with a supplied current, is provided on the hydraulic pressure line connecting the input port 11a and the output port 11b. At the pressure regulator 7, a check valve 7a is provided in parallel thereto that allows only a flow to an output port 11b side.

An inlet valve 1, which is a normally open solenoid valve, is disposed on the hydraulic pressure line between the pressure regulator 7 and the output port 11b. At the inlet valve 1, a check valve 1a is provided in parallel thereto that allows only a flow to a pressure regulator 7 side.

A reflux hydraulic pressure line 19B connected to a hydraulic pressure line between the pressure regulator 7 and the inlet valve 1 is provided from a hydraulic pressure line between the output port 11b and the inlet valve 1 via an outlet valve 2 formed of a normally closed solenoid valve.

A reservoir 3 for temporarily absorbing a surplus brake fluid, a check valve 3a, a pump 4, and an orifice 4a are arranged in this order from an outlet valve 2 side on the reflux hydraulic pressure line 19B. The check valve 3a is disposed so as to allow only a flow to the hydraulic pressure line between the pressure regulator 7 and the inlet valve 1. The pump 4 is driven by a motor 6, and is provided to generate a pressure toward the hydraulic pressure line between the pressure regulator 7 and the inlet valve 1. The orifice 4a attenuates pulsation of the pressure of the brake fluid discharged from the pump 4 and pulsation generated by operation of the pressure regulator 7.

An introduction hydraulic pressure line 19A, which connects the input port 11a and the pressure regulator 7, and a portion between the check valve 3a and the pump 4 in the reflux hydraulic pressure line 19B are connected by a suction hydraulic pressure line 19C. A mechanical suction valve 8 is provided in the suction hydraulic pressure line 19C.

The suction valve 8 switches between a state of opening the suction hydraulic pressure line 19C and a state of blocking the suction hydraulic pressure line 19C. The suction valve 8 is normally closed, and is opened based on a difference between a hydraulic pressure of a hydraulic fluid on a master cylinder MF side and a hydraulic pressure of a hydraulic fluid on a suction port side of the pump 4 which is a vacuum pressure in operation of the pump 4.

In the hydraulic unit 10 configured as described above, in a normal state, each solenoid valve is not energized, and the brake hydraulic pressure introduced from the input port 11a is output to the output port 11b through the pressure regulator 7 and the inlet valve 1, and is applied to the front brake 20F as it is. When reducing an excessive brake hydraulic pressure of the front brake 20F, for example, when performing anti-locking braking control, the inlet valve 1 is closed and the outlet valve 2 is opened to allow the brake fluid to flow to the reservoir 3 through the reflux hydraulic pressure line 19B, so that the brake fluid of the front brake 20F can be drained. In a case of increasing the hydraulic pressure of the front brake 20F when the front brake lever LF is not operated by the rider, the suction valve 8 is opened by driving the motor 6, and the brake fluid can be actively supplied to the front brake 20F by an increased pressure of the pump 4. Further, when it is desired to adjust the degree of the pressure increase of the front brake 20F, the adjustment can be performed by adjusting a current flowing through the pressure regulator 7.

The brake system BR mainly includes a rear brake lever LR as an example of a driving wheel side brake operating member, an angle sensor 53, a rear brake 20R as an example of a driving wheel side brake, and a wire W connecting the rear brake lever LR and the rear brake 20R.

The rear brake lever LR is an operating lever for operating the rear brake 20R, is disposed on the left side of the handlebar of the motorcycle MC, and can be operated by the rider's left hand.

The angle sensor 53 is a sensor for detecting an operation angle of the rear brake lever LR.

The rear brake 20R is a brake that brakes the rear wheel WR, and is a mechanical brake that operates when a force generated at the time the rear brake lever LR is gripped is transmitted via the wire W. The rear brake 20R is, for example, a drum brake, and includes a drum 25, a brake shoe (not shown), and a return spring (not shown).

The drum 25 is rotatable integrally with the rear wheel WR. The brake shoe is rotatable between a contact position where the brake shoe comes into contact with an inner peripheral surface of the drum 25 and a separation position where the brake shoe is separated from the inner peripheral surface of the drum 25. The return spring biases the brake shoe from the contact position to the separation position. When the rider grips the rear brake lever LR, the wire W is pulled by the rear brake lever LR, whereby the brake shoe rotates from the separation position toward the contact position against a biasing force of the return spring.

The controller 100 includes, for example, a central processing unit (CPU), a random access memory (RAM), a read only memory (ROM), and an input and output circuit. The controller 100 controls the hydraulic unit 10 by performing various types of calculation processing based on inputs from the wheel speed sensor 51, the speed detection sensor 52, the angle sensor 53, and the throttle sensor 54, and programs, data, and the like stored in the ROM.

Specifically, the controller 100 has a function of executing brake hold control including pressure increase control of increasing the hydraulic pressure of the front brake 20F and holding control of holding the hydraulic pressure of the front brake 20F. In the pressure increase control, the controller 100 does not supply a current to flow through the inlet valve 1 and the outlet valve 2, and supplies a current corresponding to a command current value to the pressure regulator 7 to drive the motor 6. When the suction valve 8 is opened by driving the motor 6 and the pressure increase control is executed, the hydraulic pressure of the front brake 20F is increased to a predetermined pressure corresponding to the command current value to the pressure regulator 7, and then is maintained at the predetermined pressure.

When switching the pressure increase control to the holding control, the controller 100 stops the motor 6 while maintaining each solenoid valve in their states presented during the pressure increase control. When the suction valve 8 is closed due to stop of the motor 6 and the holding control is executed, the hydraulic pressure of the front brake 20F is held at the predetermined pressure corresponding to the command current value to the pressure regulator 7, following the pressure increase control. When switching the holding control to the pressure increase control, the controller 100 drives the motor 6 while maintaining each solenoid valve in their states presented during the holding control. That is, after executing the pressure increase control once, the controller 100 switches the holding control and the pressure increase control by switching a driving state of the motor 6.

When it is determined that the motorcycle MC is stopped and a condition for maintaining the vehicle stop is satisfied, the controller 100 executes (starts) the brake hold control. In the embodiment, the controller 100 determines whether the motorcycle MC is stopped, based on speed information acquired from the wheel speed sensor 51 or the speed detection sensor 52 and throttle opening degree information acquired from the throttle sensor 54. Here, the speed information may be a wheel speed or may be a vehicle body velocity calculated based on the wheel speed.

When the speed indicated by the speed information is equal to or lower than a first speed and the throttle opening degree indicated by the throttle opening degree information is equal to or less than a first opening degree, the controller 100 determines that the motorcycle MC is stopped.

The first speed may be a value close to 0, for example, 0. The first opening degree may be a value close to 0, for example, 0. Hereinafter, a condition used for the vehicle stop determination described above is also referred to as a vehicle stop condition.

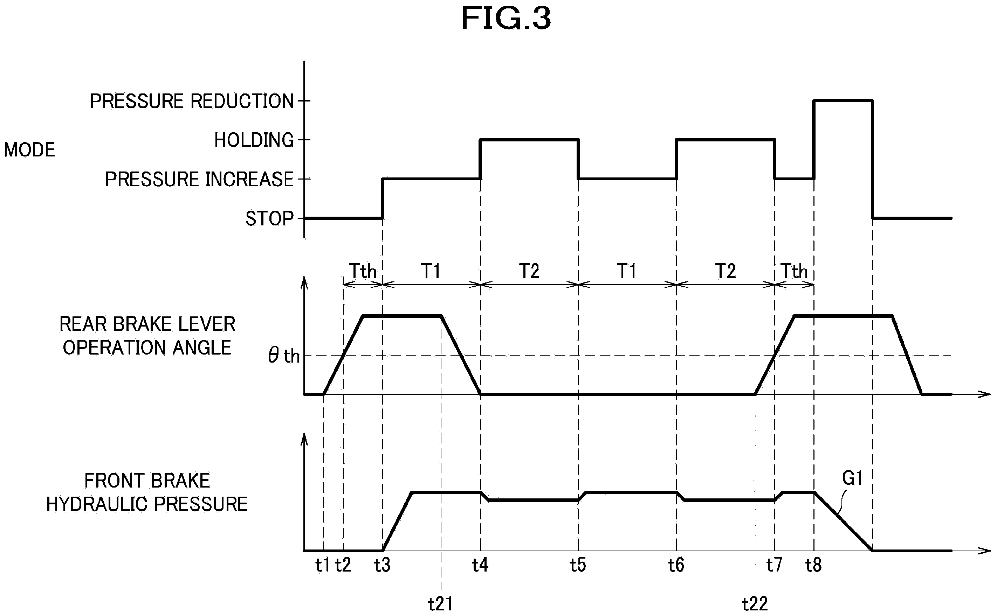

In the embodiment, the condition for maintaining the vehicle stop is a condition that an operation on the rear brake lever LR is continued for a predetermined time or longer. The controller 100 determines, based on a signal from the angle sensor 53, whether the rear brake lever LR is operated. For example, when the operation angle acquired from the angle sensor 53 is equal to or smaller than a predetermined angle θth, the controller 100 determines that the rear brake lever LR is not operated, and when the operation angle acquired from the angle sensor 53 is larger than the predetermined angle θth, the controller 100 determines that the rear brake lever LR is operated. The predetermined angle θth may be, for example, an angle larger than 0 (see FIG. 3).

When it is determined that a first condition is satisfied after executing the pressure increase control, the controller 100 switches the pressure increase control to the holding control. In the embodiment, the first condition is that a first time elapses from the start of the pressure increase control. Here, the first time is a time equal to or longer than a time taken for the hydraulic pressure of the front brake 20F to increase from 0 to the predetermined pressure by the pressure increase control, and is appropriately determined by an experiment, a simulation, or the like.

When it is determined that a second condition is satisfied after executing the holding control, the controller 100 switches the holding control to the pressure increase control. In the embodiment, the second condition is that a second time elapses from the start of the holding control. Here, the second time is appropriately determined by an experiment, a simulation, or the like to a time in which, even when the hydraulic pressure of the front brake 20F gradually decreases during the holding control due to the opening degree of the pressure regulator 7 or the like, the hydraulic pressure of the front brake 20F does not decrease accordingly. The first time and the second time may be different times or may be the same time.

When a release condition for releasing the brake hold control is satisfied, the controller 100 reduces the hydraulic pressure of the front brake 20F at a first gradient. In the embodiment, the release condition is that, after the rear brake lever LR is gripped again, the operation is continued for a predetermined time or longer, or that the above-described vehicle stop condition is not satisfied. Here, the determination as to whether the rear brake lever LR is gripped again can be performed by determining whether the rear brake lever LR in a non-operated state is operated, for example, whether the operation angle of the rear brake lever LR becomes equal to or greater than the predetermined angle θth from a state of being 0. Although the predetermined time in the release condition and the predetermined time in the condition for maintaining the vehicle stop are the same time in the embodiment, the predetermined times may be different times. When the hydraulic pressure of the front brake 20F is reduced at the first gradient, the controller 100 sets states of each solenoid valve and the motor to the same states as in the holding control, and gradually decreases the magnitude of the command current value to the pressure regulator 7.

When the rider has an intention to start from a standstill, the controller 100 reduces the hydraulic pressure of the front brake 20F at a second gradient larger than the first gradient. Specifically, when the operation amount of the accelerator AC is equal to or greater than a predetermined amount, or when the wheel speed or the vehicle body velocity exceeds a predetermined threshold, the controller 100 reduces the hydraulic pressure of the front brake 20F at a second gradient larger than the first gradient. In the embodiment, the determination as to whether the operation amount of the accelerator AC is equal to or greater than the predetermined amount is performed by determining whether the throttle opening degree information acquired from the throttle sensor 54 is equal to or greater than a second opening degree larger than the first opening degree described above. The determination as to whether the wheel speed or the vehicle body velocity exceeds the predetermined threshold is performed by determining whether the speed information acquired from the wheel speed sensor 51 or the speed detection sensor 52 exceeds a second speed higher than the first speed.

When the hydraulic pressure of the front brake 20F is reduced at the second gradient, the controller 100 sets the states of each solenoid valve and the motor to the same states as in the holding control, and sets the command current value for the pressure regulator 7 to zero. Specifically, for example, the controller 100 reduces the hydraulic pressure of the front brake 20F at the second gradient by stopping power supply to each solenoid valve and the motor.

A method of releasing the hydraulic pressure from the outlet valve 2 by causing a current to flow through the inlet valve 1 and the outlet valve 2 and causing no current to flow through the other solenoid valves may be adopted as a method of reducing the hydraulic pressure of the front brake 20F at the second gradient.

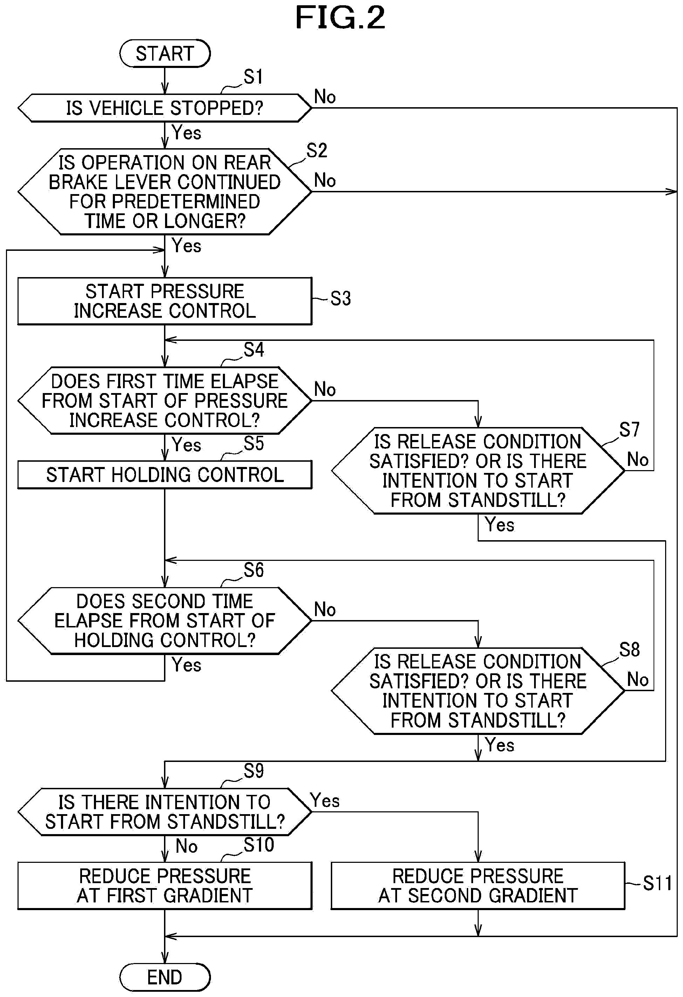

Next, the operation of the controller 100 will be described in detail. The controller 100 repeatedly executes the processing shown in FIG. 2 at all times.

In the processing in FIG. 2, the controller 100 first determines whether the motorcycle MC is stopped (S1). If it is determined in step S1 that the motorcycle MC is stopped (Yes), the controller 100 determines whether the operation on the rear brake lever LR is continued for a predetermined time or longer (S2). In step S1 or step S2, if it is determined to be No, the controller 100 ends the processing.

If it is determined in step S2 that the operation is continued for the predetermined time or longer (Yes), the controller 100 starts the pressure increase control (S3). After step S3, the controller 100 determines whether the first time elapses from the start of the pressure increase control (S4).

If it is determined in step S4 that the first time does not elapse (No), the controller 100 determines whether the release condition is satisfied or whether the rider has an intention to start from a standstill (S7). If it is determined in step S7 that the release condition is not satisfied and there is no intention to start from a standstill (No), the controller 100 returns to the processing of step S3 and continues the pressure increase control. If it is determined in step S4 that the first time elapses (Yes), the controller 100 starts the holding control (S5).

After step S5, the controller 100 determines whether the second time elapses from the start of the holding control (S6). If it is determined in step S6 that the second time elapses (Yes), the controller 100 returns to step S3 and starts the pressure increase control. If it is determined in step S6 that the second time does not elapse (No), the controller 100 determines whether the release condition is satisfied, or whether the rider has an intention to start from a standstill (S8).

If it is determined in step S8 that the release condition is not satisfied and there is no intention to start from a standstill (No), the controller 100 returns to the processing of step S6 and continues the holding control. In step S7 or step S8, if it is determined to be Yes, the controller 100 determines whether the rider has an intention to start from a standstill, that is, whether a condition for ending the brake hold control is a condition of an intention to start from a standstill (S9).

If it is determined in step S9 that the condition for ending the brake hold control is not the condition of an intention to start from a standstill (No), since the condition for ending the brake hold control is the release condition, the controller 100 gradually reduces the hydraulic pressure of the front brake 20F at the first gradient (S10), and then ends the processing. If it is determined in step S9 that the condition for ending the brake hold control is the condition of an intention to start from a standstill (Yes), the controller 100 reduces the hydraulic pressure of the front brake 20F at the second gradient without stopping (S11), and ends the processing.

Next, a specific example of the operation of the controller 100 will be described in detail.

As illustrated in FIG. 3, when the rider operates the rear brake lever LR (time-point t1) in a state where the motorcycle MC is stopped and the operation angle of the rear brake lever LR becomes equal to or greater than the predetermined angle θth (time-point t2), the controller 100 determines that the rear brake lever LR is operated.

When a time over which the operation angle becomes equal to or greater than the predetermined angle θth becomes a predetermined time Tth or longer (time-point t3), the controller 100 starts the pressure increase control. Accordingly, the hydraulic pressure of the front brake 20F increases.

When a first time T1 elapses from the start of the pressure increase control (time-point t4), the controller 100 switches the pressure increase control to the holding control. Accordingly, the hydraulic pressure of the front brake 20F is held.

When a second time T2 elapses from the start of the holding control (time-point t5), the controller 100 starts the pressure increase control again. Thereafter, similarly, the holding control and the pressure increase control are alternately executed in accordance with the passage of time (time-points t6 and t7).

When the rider releases the rear brake lever LR from his/her hand during the brake hold control (time-point t21), the operation angle of the rear brake lever LR decreases and becomes 0 (time-point t4). When the rider grips the rear brake lever LR again (time-point t22), the operation angle of the rear brake lever LR increases.

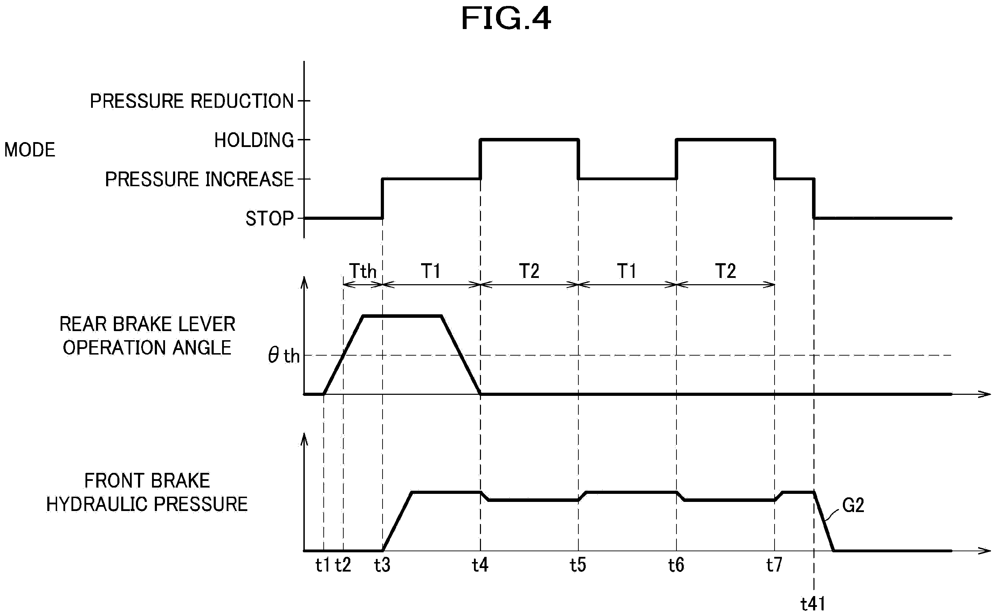

When the predetermined time Tth elapses (time-point t8) after the operation angle of the rear brake lever LR becomes equal to or greater than the predetermined angle θth from 0 during the brake hold control, the controller 100 gradually reduces the hydraulic pressure of the front brake 20F at a first gradient G1. As illustrated in FIG. 4, when there is an intention to start from a standstill such as the rider operating the accelerator AC during the brake hold control (time-point t41), the controller 100 reduces the hydraulic pressure of the front brake 20F at a second gradient G2 larger than the first gradient G1 without stopping.

According to the above, the following effects can be obtained in the embodiment.

Since the brake hold control can be executed without providing a hydraulic unit for the rear wheel WR that is the driving wheel, the cost can be reduced.

By alternately switching the pressure increase control and the holding control, for example, even when the hydraulic pressure slightly decreases during the holding control, the pressure increase control is executed thereafter, so that the hydraulic pressure of the front brake 20F can be favorably maintained at the predetermined pressure.

Since the switching between the pressure increase control and the holding control is performed based on the time, a detection means such as a hydraulic pressure sensor is not required, and an inexpensive configuration can be implemented.

When the release condition of the brake hold control is satisfied, since the hydraulic pressure of the front brake 20F is gradually reduced at the first gradient G1, it is possible to restrict the rider from having a feeling of discomfort.

When the rider has an intention to start from a standstill, since the hydraulic pressure of the front brake 20F is reduced at the second gradient G2 larger than the first gradient G1, the pressure reduction is performed quickly, and the motorcycle MC can be caused to start from a standstill smoothly.

By setting the operation on the rear brake lever LR as the condition for maintaining the vehicle stop, it is possible to accurately determine whether the rider has an intention to maintain the vehicle stop.

Since whether the rear brake lever LR is operated is determined based on a signal from the angle sensor 53, for example, this configuration can be made less expensive than when the operation on the rear brake lever is determined using another sensor.

Since the rear brake 20R is a mechanical brake, the brake fluid pressure control device C for a bar handle vehicle can be implemented to have an inexpensive configuration.

The invention is not limited to the above-described embodiment, and can be used in various forms as exemplified below. In the following description, members having substantially the same structures as those of the above-described embodiment are denoted by the same reference signs, and a description thereof is omitted.

The bar handle vehicle is not limited to the motorcycle MC, and may be any vehicle that is operated with a bar handle, for example, a three-wheeled vehicle or a four-wheeled vehicle.

Although the driving wheel is the rear wheel WR and the driven wheel is the front wheel WF in the above-described embodiment, for example, the driving wheel may be the front wheel and the driven wheel may be the rear wheel.

The condition for maintaining the vehicle stop is not limited to the condition described in the above-described embodiment, and may be, for example, a condition that the operation on the driven wheel side brake operating member is continued for a predetermined time or longer.

The first condition and the second condition are not limited to the conditions described in the above-described embodiment. The first condition may be, for example, that the hydraulic pressure of the driven wheel side brake becomes equal to or greater than a first threshold, and the second condition may be, for example, that the hydraulic pressure of the driven wheel side brake becomes less than a second threshold smaller than the first threshold. In this case, it is sufficient to provide a hydraulic pressure sensor configured to detect the hydraulic pressure of the driven wheel side brake.

The brake operating member is not limited to a lever, and may be, for example, a foot brake pedal.

The driving wheel side brake may be a hydraulic brake. Also in this case, the cost can be reduced by not providing a hydraulic unit for the driving wheel side brake.

The suction valve may be a normally closed solenoid valve.

Modifications are possible within the scope of the invention, as defined by the appended claims.

## Claims

1. A brake fluid pressure control device (C) for a bar handle vehicle (MC), the device comprising:
a driving wheel side brake (20R) configured to brake a driving wheel (WR);
a driven wheel side brake (20F) configured to brake a driven wheel (WF);
a hydraulic unit (10) configured to increase, hold, and reduce a hydraulic pressure of the driven wheel side brake (20F);
a controller (100) configured to control the hydraulic unit (10),
a driven wheel side brake operating member (LF) configured to operate the driven wheel side brake (20F); and
a driving wheel side brake operating member (LR) configured to operate the driving wheel side brake (20R), wherein
when it is determined that a bar handle vehicle (MC) is stopped and a condition for maintaining a vehicle stop is satisfied, the controller (100) executes brake hold control including pressure increase control of increasing the hydraulic pressure of the driven wheel side brake (20F) and holding control of holding the hydraulic pressure of the driven wheel side brake (20F), **characterized in that**
the condition for maintaining a vehicle stop is a condition that an operation on the driving wheel side brake operating member (LR) is continued for a predetermined time or longer.

2. The brake fluid pressure control device (C) for a bar handle vehicle (MC) according to claim 1, wherein
the controller (100)
switches the pressure increase control to the holding control when it is determined that a first condition is satisfied after executing the pressure increase control, and
switches the holding control to the pressure increase control when it is determined that a second condition is satisfied after executing the holding control.

3. The brake fluid pressure control device (C) for a bar handle vehicle (MC) according to claim 2, wherein
the first condition is that a first time elapses from start of the pressure increase control, and
the second condition is that a second time elapses from start of the holding control.

4. The brake fluid pressure control device (C) for a bar handle vehicle (MC) according to claim 1, wherein
when a release condition for releasing the brake hold control is satisfied, the controller (100) reduces the hydraulic pressure of the driven wheel side brake (20F) at a first gradient.

5. The brake fluid pressure control device (C) for a bar handle vehicle (MC) according to claim 4, wherein
when an operation amount of an accelerator (AC) is equal to or greater than a predetermined amount, or when a wheel speed or a vehicle body velocity exceeds a predetermined threshold, the controller (100) reduces the hydraulic pressure of the driven wheel side brake (20F) at a second gradient larger than the first gradient.

6. The brake fluid pressure control device (C) for a bar handle vehicle (MC) according to claim 1, wherein
the controller (100) determines, based on a signal from an angle sensor (53) configured to detect an operation angle of the driving wheel side brake operating member (LR), whether the driving wheel side brake operating member (LR) is operated.

7. The brake fluid pressure control device (C) for a bar handle vehicle (MC) according to any one of claims 1 to 6, wherein
the driving wheel side brake (20R) is a mechanical brake.

## Patentansprüche

1. Bremsflüssigkeitsdrucksteuerungsvorrichtung (C) für ein Fahrzeug mit Lenkstange (MC), wobei die Vorrichtung umfasst:
eine Bremse (20R) auf der Seite eines Antriebsrads, die so ausgebildet ist, dass sie ein Antriebsrad (WR) bremst;
eine Bremse (20F) auf der Seite eines angetriebenen Rads, die so ausgebildet ist, dass sie ein angetriebenes Rad (WF) bremst;
eine Hydraulikeinheit (10), die so ausgebildet ist, dass sie einen Hydraulikdruck der Bremse (20F) auf der Seite des angetriebenen Rads erhöht, hält und verringert;
eine Steuereinheit (100), die so ausgebildet ist, dass sie die Hydraulikeinheit (10) steuert,
ein Betätigungselement (LF) für die Bremse auf der Seite des angetriebenen Rads, das so ausgebildet ist, dass es die Bremse (20F) auf der Seite des angetriebenen Rades betätigt; und
ein Betätigungselement (LR) für die Bremse auf der Seite des Antriebsrads, das so ausgebildet ist, dass es die Bremse (20R) auf der Seite des Antriebsrads betätigt, wobei
wenn bestimmt wird, dass ein Fahrzeug mit Lenkstange (MC) angehalten ist und eine Bedingung zur Aufrechterhaltung eines Fahrzeugstillstands erfüllt ist, die Steuereinheit (100) eine Bremshaltesteuerung ausführt, einschließlich einer Druckerhöhungssteuerung, bei der der Hydraulikdruck der Bremse (20F) auf der Seite des angetriebenen Rads erhöht wird, und eine Haltesteuerung, bei der der Hydraulikdruck der Bremse (20F) auf der Seite des angetriebenen Rads gehalten wird, **dadurch gekennzeichnet, dass** die Bedingung zur Aufrechterhaltung eines Fahrzeugstillstands eine Bedingung ist, dass eine Betätigung des Betätigungselements (LR) für die Bremse auf der Seite des Antriebsrads für eine vorbestimmte Zeit oder länger fortgesetzt wird.

2. Bremsflüssigkeitsdrucksteuerungsvorrichtung (C) für ein Fahrzeug mit Lenkstange (MC) nach Anspruch 1, wobei
die Steuereinheit (100)
die Druckerhöhungssteuerung auf die Haltesteuerung umschaltet, wenn bestimmt wird, dass eine erste Bedingung nach Ausführung der Druckerhöhungssteuerung erfüllt ist, und
die Haltesteuerung auf die Druckerhöhungssteuerung umschaltet, wenn bestimmt wird, dass eine zweite Bedingung nach Ausführung der Haltesteuerung erfüllt ist.

3. Bremsflüssigkeitsdrucksteuerungsvorrichtung (C) für ein Fahrzeug mit Lenkstange (MC) nach Anspruch 2, wobei
die erste Bedingung darin besteht, dass eine erste Zeitdauer seit Beginn der Druckerhöhungssteuerung verstreicht, und
die zweite Bedingung darin besteht, dass eine zweite Zeitdauer seit Beginn der Haltesteuerung verstreicht.

4. Bremsflüssigkeitsdrucksteuerungsvorrichtung (C) für ein Fahrzeug mit Lenkstange (MC) nach Anspruch 1, wobei
wenn eine Aufhebebedingung zum Aufheben der Bremshaltesteuerung erfüllt ist, die Steuereinheit (100) den Hydraulikdruck der Bremse (20F) auf der Seite des angetriebenen Rads mit einem ersten Gradienten verringert.

5. Bremsflüssigkeitsdrucksteuerungsvorrichtung (C) für ein Fahrzeug mit Lenkstange (MC) nach Anspruch 4, wobei
wenn ein Betätigungsgrad eines Gasgriffs (AC) gleich oder größer als ein vorbestimmter Grad ist oder wenn eine Radgeschwindigkeit oder eine Fahrzeugkarosseriegeschwindigkeit einen vorbestimmten Schwellenwert überschreitet, die Steuereinheit (100) den Hydraulikdruck der Bremse (20F) auf der Seite des angetriebenen Rads mit einem zweiten Gradienten verringert, der größer ist als der erste Gradient.

6. Bremsflüssigkeitsdrucksteuerungsvorrichtung (C) für ein Fahrzeug mit Lenkstange (MC) nach Anspruch 1, wobei
die Steuereinheit (100), basierend auf einem Signal von einem Winkelsensor (53), der so ausgebildet ist, dass er einen Betätigungswinkel des Betätigungselements (LR) für die Bremse auf der Seite des Antriebsrads detektiert, bestimmt, ob das Betätigungselement (LR) für die Bremse auf der Seite des Antriebsrads betätigt wird.

7. Bremsflüssigkeitsdrucksteuerungsvorrichtung (C) für ein Fahrzeug mit Lenkstange (MC) nach einem der Ansprüche 1 bis 6, wobei
die Bremse (20R) auf der Seite des Antriebsrads eine mechanische Bremse ist.

## Revendications

1. Dispositif de commande de pression (C) de liquide de frein, destiné à un véhicule à guidon (MC), le dispositif comprenant :
un frein côté roue motrice (20R) configuré pour freiner une roue motrice (WR) ;
un frein côté roue entraînée (20F) configuré pour freiner une roue entraînée (WF) ;
une unité hydraulique (10) configurée pour augmenter, maintenir et réduire une pression hydraulique du frein côté roue entraînée (20F) ;
un organe de commande (100) configuré pour commander l'unité hydraulique (10),
un organe d'actionnement (LF) de frein côté roue entraînée, configuré pour actionner le frein côté roue entraînée (20F) ; et
un organe d'actionnement (LR) de frein côté roue motrice, configuré pour actionner le frein côté roue motrice (20R),
dans lequel
lorsqu'il est déterminé qu'un véhicule à guidon (MC) est à l'arrêt et qu'une condition de maintien d'un arrêt de véhicule est remplie, l'organe de commande (100) exécute une commande de maintien de frein, incluant une commande d'augmentation de pression consistant à augmenter la pression hydraulique du frein côté roue entraînée (20F) et une commande de maintien consistant à maintenir la pression hydraulique du frein côté entraînée (20F), **caractérisé en ce que**
la condition de maintien d'un arrêt de véhicule est une condition selon laquelle une action sur l'organe d'actionnement de frein (LR) côté roue motrice se poursuit pendant une durée préétablie ou plus longtemps.

2. Dispositif de commande de pression (C) de liquide de frein destiné à un véhicule à guidon (MC) selon la revendication 1, dans lequel
l'organe de commande (100)
commute de la commande d'augmentation de pression à la commande de maintien lorsqu'il est déterminé qu'une première condition est remplie après l'exécution de la commande d'augmentation de pression, et
commute de la commande de maintien à la commande d'augmentation de pression lorsqu'il est déterminé qu'une deuxième condition est remplie après l'exécution de la commande de maintien.

3. Dispositif de commande de pression (C) de liquide de frein destiné à un véhicule à guidon (MC) selon la revendication 2, dans lequel
la première condition est qu'une première durée s'écoule à partir du déclenchement de la commande d'augmentation de pression, et
la deuxième condition est qu'une deuxième durée s'écoule à partir du déclenchement de la commande de maintien.

4. Dispositif de commande de pression (C) de liquide de frein destiné à un véhicule à guidon (MC) selon la revendication 1, dans lequel
lorsqu'une condition de relâchement pour relâcher la commande de maintien de frein est remplie, l'organe de commande (100) réduit la pression hydraulique du frein côté roue entraînée (20F) selon un premier gradient.

5. Dispositif de commande de pression (C) de liquide de frein destiné à un véhicule à guidon (MC) selon la revendication 4, dans lequel
lorsqu'une quantité d'actionnement d'un accélérateur (AC) est égale ou supérieure à une quantité préétablie, ou lorsqu'une vitesse de roue ou une vitesse de corps de véhicule excède un seuil préétabli, l'organe de commande (100) réduit la pression hydraulique du frein côté roue entraînée (20F) selon un deuxième gradient supérieur au premier gradient.

6. Dispositif de commande de pression (C) de liquide de frein destiné à un véhicule à guidon (MC) selon la revendication 1, dans lequel
l'organe de commande (100) détermine, sur la base d'un signal provenant d'un capteur d'angle (53) configuré pour détecter un angle d'actionnement de l'organe d'actionnement (LR) de frein côté roue motrice, si l'organe d'actionnement (LR) de frein côté roue motrice est actionné.

7. Dispositif de commande de pression (C) de liquide de frein destiné à un véhicule à guidon (MC) selon l'une quelconque des revendications 1 à 6, dans lequel
le frein côté roue motrice (20R) est un frein mécanique.
